# EUROPÄISCHE PATENTSCHRIFT

(11) **EP 3 343 807 B1**
(45) Veröffentlichungstag und Bekanntmachung des Hinweises auf die Patenterteilung: **04.09.2019**
(21) Anmeldenummer: 17202853.2
(22) Anmeldetag: 21.11.2017
(51) Int. Cl.: H04B 11/00, G10K 11/24, G01H 1/00, G01P 3/16

(54) **VERFAHREN ZUR REGELUNG EINES ANTRIEBSMOTORS EINES FAHRZEUGS MIT EINER GESCHWINDIGKEITSERMITTLUNG UND VORRICHTUNGEN**
METHOD FOR REGULATING A DRIVE ENGINE OF VEHICLE WITH SPEED DETECTION AND DEVICES
PROCÉDÉ DE RÉGLAGE D'UN MOTEUR D'ENTRAÎNEMENT D'UN VÉHICULE À L'AIDE D'UN MOYEN DE DÉTERMINATION DE LA VITESSE ET DISPOSITIFS

(30) Priorität: 28.12.2016 DE 102016226248
(43) Veröffentlichungstag der Anmeldung: 04.07.2018
(73) Patentinhaber: Robert Bosch GmbH, 70442 Stuttgart (DE)
(72) Erfinder: Weissert, Mario, 72766 Reutlingen (DE); Dackermann, Tim, 72072 Tuebingen (DE)

(56) Entgegenhaltungen:
- LINDFORS MARTIN ET AL: "Vehicle speed tracking using chassis vibrations", 2016 IEEE INTELLIGENT VEHICLES SYMPOSIUM (IV), IEEE, 19. Juni 2016 (2016-06-19), Seiten 214-219, XP032938966, DOI: 10.1109/IVS.2016.7535388 [gefunden am 2016-08-05]
- Steve Hanly: "Calculating Tire Speed from Vibration", , 15. November 2016 (2016-11-15), XP055469655, Gefunden im Internet: URL:https://blog.mide.com/calculating-tire -speed-from-vibration [gefunden am 2018-04-23]
- HINBIN LIN ET AL: "A new method for measuring engine rotational speed based on the vibration and discrete spectrum correction technique", MEASUREMENT., Bd. 46, Nr. 7, 4. April 2013 (2013-04-04), Seiten 2056-2064, XP055469638, GB ISSN: 0263-2241, DOI: 10.1016/j.measurement.2013.03.017

## Beschreibung

Die vorliegende Erfindung betrifft ein Verfahren zur Regelung eines Antriebsmotors eines Fahrzeugs mit einer Geschwindigkeitsermittlung, wobei das Fahrzeug insbesondere ein Elektrofahrrad oder ein kraftunterstützter Rollstuhl ist. Die Erfindung betrifft auch ein System, welches dazu eingerichtet ist, das Verfahren durchzuführen, einen Schwingungserzeuger für das Verfahren sowie das Fahrzeug mit dem System.

### Stand der Technik

Zur Regelung eines Antriebsmotors in kraftunterstützten Fahrzeugen ist eine Ermittlung der aktuellen Geschwindigkeit des Fahrzeugs notwendig. Die Ermittlung der Geschwindigkeit eines Fahrzeugs, insbesondere eines Elektrofahrrads, kann mittels eines Magnets an einer Radspeiche erfolgen, wobei dessen Umlaufzeit pro Radumdrehung durch einen Reed-Sensor erfasst wird. Die ermittelte Geschwindigkeit ist aufgrund der zeitlich beabstandeten Messimpulse bei niedrigen Geschwindigkeiten und bei schnell wechselnden Geschwindigkeiten ungenau. Dadurch resultiert beispielsweise bei der Regelung einer Schiebehilfe eine niedrigere Geschwindigkeit als gesetzlich möglich oder bei der Regelung eines Antiblockiersystems ein längerer Bremsweg. Eine alternative Messung der Geschwindigkeit mittels eines GPS-Sensors, ist aufgrund der begrenzten GPS-Ortsauflösung von 1-10 m bei niedrigen Geschwindigkeiten und bei schnell wechselnden Geschwindigkeiten ebenfalls ungenau.

Die Nicht-Patentliteratur "Vehicle speed tracking using chassis vibrations" von M. Lindfors et. al. (IEEE Intelligent Vehicles Symposium 2016) beschreibt ein Verfahren zur Bestimmung einer Geschwindigkeit eines Fahrzeugs in Abhängigkeit einer Beschleunigung, weiche mittels eines Beschleunigungssensors erfasst wird, wobei der Beschleunigungssensor an einer Karosserie des Fahrzeugs angeordnet ist.

Die Aufgabe der vorliegenden Erfindung ist eine Ermittlung der Geschwindigkeit eines Fahrzeugs zur Regelung eines Antriebsmotors des Fahrzeugs bei niedriger und/oder schnell wechselnder Geschwindigkeit.

### Offenbarung der Erfindung

Die vorliegende Erfindung betrifft ein Verfahren zur Regelung eines Antriebsmotors eines Fahrzeugs mit einer Geschwindigkeitsermittlung, wobei das Fahrzeug insbesondere ein Elektrofahrrad oder ein kraftunterstützter Rollstuhl ist.

Das Fahrzeug umfasst mindestens einen Schwingungssensor und ein vom Schwingungssensor beabstandetes Rad mit wenigstens einem Schwingungserzeuger. Der Schwingungserzeuger am Rad erzeugt ein mechanisches Schwingungssignal in Abhängigkeit der Geschwindigkeit des Fahrzeugs und überträgt das Schwingungssignal auf das Rad. Beispielsweise ist der Schwingungserzeuger ein Ventil des Reifens am Rad, ein Reifenprofil des Rads, ein Lager des Rads, beispielsweise ein Kugellager, und/oder wenigstens eine Radspeiche. Der Schwingungserzeuger vibriert bzw. schwingt in Abhängigkeit der Geschwindigkeit des Fahrzeugs. Die erzeugte Frequenz und/oder die Amplitude des Schwingungssignals des Schwingungserzeugers passt sich bevorzugt mit einer geringen oder keinen Zeitverzögerung einer Änderung der Geschwindigkeit des Fahrzeugs an. Das erzeugte Schwingungssignal wird auf einen Rahmen des Fahrzeugs übertragen, beispielsweise über das Lager des Rads, insbesondere ein Kugellager.

Das erfindungsgemäße Verfahren umfasst mindestens eine Erfassung eines Schwingungsfrequenzspektrums des Rahmens des Fahrzeugs mittels eines Schwingungssensors. Anschließend wird eine Ermittlung der aktuellen Geschwindigkeit des Fahrzeugs in Abhängigkeit des erfassten Schwingungsfrequenzspektrums durchgeführt. Das Verfahren weist außerdem eine Regelung eines Antriebsmotors in Abhängigkeit der ermittelten Geschwindigkeit auf. Das Verfahren ermittelt vorteilhafterweise auch bei niedrigen Geschwindigkeiten und/oder bei schnell wechselnden Geschwindigkeiten des Fahrzeugs die aktuelle Geschwindigkeit. Dadurch wird eine Regelung des Antriebsmotors für eine komfortable Schiebe- bzw. Anfahrhilfe und/oder für ein optimiertes Antiblockiersystem ermöglicht.

In einer bevorzugten Ausgestaltung der Erfindung umfasst das Verfahren die Erzeugung des Schwingungssignals in Abhängigkeit der aktuellen Geschwindigkeit des Fahrzeugs mittels des Schwingungserzeugers. Besonders bevorzugt ist die erzeugte Schwingungssignalfrequenz kleiner 16 Hz und größer 20 kHz, wodurch die erzeugte Schwingungssignalfrequenz für den Menschen nicht wahrnehmbar ist. Durch diese Ausgestaltung können vorteilhafterweise hohe Signalqualitäten des Schwingungssignals ohne Beeinträchtigung für den Nutzer des Fahrzeugs durch Vibrationen und/oder störende Geräusche erzeugt werden. Die Regelung des Antriebsmotors bzw. die Ermittlung der Geschwindigkeit des Fahrzeugs wird in dieser Ausgestaltung fehlerfreier bzw. genauer.

In einer Ausgestaltung erfolgt die Ermittlung der Geschwindigkeit in Abhängigkeit eines Vergleichs des erfassten Schwingungsfrequenzspektrums mit wenigstens einem Referenzspektrum. Die Regelung des Antriebsmotors bzw. die Ermittlung der Geschwindigkeit des Fahrzeugs wird in dieser Ausgestaltung vorteilhafterweise sehr genau.

In einer alternativen Ausgestaltung wird die Ermittlung der Geschwindigkeit in Abhängigkeit eines Vergleichs wenigstens einer Amplitude mindestens einer Frequenz des Schwingungsfrequenzspektrums mit wenigstens einem Amplitudenschwellenwert durchgeführt. Die Ermittlung der Geschwindigkeit erfolgt in dieser Ausgestaltung insbesondere in Abhängigkeit der Zeitdauer zwischen Überschreitungen des Amplitudenschwellenwerts. Die Regelung des Antriebsmotors bzw. die Ermittlung der Geschwindigkeit des Fahrzeugs wird in dieser Ausgestaltung schnell und genau.

Die Erfindung betrifft auch einen Schwingungserzeuger als Vorrichtung. Der Schwingungserzeuger ist dazu eingerichtet, an einem Rad eines Fahrzeugs angeordnet zu werden und in Fahrt mit diesem mitzudrehen. Beispielsweise kann der Schwingungserzeuger zwischen den Speichen eines Rads oder an der Radnabe eines Elektrofahrrads als Fahrzeug fixiert werden. Die Fixierung des Schwingungserzeugers am Rad erfolgt bevorzugt formschlüssig und/oder kraftschlüssig und insbesondere lösbar. Der Schwingungserzeuger ist dazu eingerichtet, ein mechanisches Schwingungssignal in Abhängigkeit der Geschwindigkeit des Fahrzeugs oder der Raddrehzahl des Rads zu erzeugen und das Schwingungssignal an das Rad zu übertragen. Beispielsweise erzeugt der Schwingungserzeuger das Schwingungssignal in Abhängigkeit einer Zentrifugalkraft und/oder in Abhängigkeit der während der Fahrt den Schwindungserzeuger umströmenden Luft. Der Schwingungserzeuger als Vorrichtung erzeugt das Schwingungssignal aktiv beispielsweise durch einen Aktor. Mit dem aktiven Schwingungserzeuger wird vorteilhafterweise eine Ermittlung der Geschwindigkeit bei niedrigen Geschwindigkeiten und/oder schnell wechselnden Geschwindigkeiten sehr zuverlässig ermöglicht.

In einer Weiterbildung ist das durch den Schwingungserzeuger erzeugte mechanische Schwingungssignal des Schwingungserzeugers für den Menschen nicht wahrnehmbar, d.h. die erzeugte Schwingungssignalfrequenz ist kleiner als 16 Hz oder größer als 20 kHz. Durch diese Weiterbildung nimmt der Fahrzeugführer, beispielsweise ein Radfahrer, das erzeugte Schwingungssignal vorteilhafterweise nicht wahr.

Die Erfindung betrifft auch ein System zur Regelung des Antriebsmotors des Fahrzeugs. Das System umfasst mindestens den Schwingungssensor, wobei der Schwingungssensor dazu eingerichtet ist, am Fahrzeug, beispielsweise am Rahmen oder in einem Motorgehäuse, d.h. beabstandet von den Rädern, angeordnet zu werden. Der Schwingungssensor ist dazu eingerichtet, ein Schwingungsfrequenzspektrum des Rahmens des Fahrzeugs zu erfassen, wobei das Schwingungsfrequenzspektrum das Schwingungssignal des Schwingungserzeugers umfasst, beispielsweise das Schwingungssignal des Reifenprofils des Rads. Der Schwingungssensor ist bevorzugt ein Beschleunigungssensor, ein Drucksensor oder ein Mikrofon. Das System umfasst außerdem ein Steuergerät, welches eine Recheneinheit aufweist. Die Recheneinheit ist dazu eingerichtet, das erfindungsgemäße Verfahren durchzuführen. Die Recheneinheit erfasst dafür ein Sensorsignal des Schwingungssensors und erzeugt ein Steuersignal für den Antriebsmotor in Abhängigkeit des erfassten Sensorsignals. Durch das erfindungsgemäße System wird eine niedrige Geschwindigkeit und/oder eine schnell wechselnde Geschwindigkeiten des Fahrzeugs zuverlässig erkannt.

In einer bevorzugten Ausgestaltung des Systems ist der Schwingungssensor in einem Gehäuse des Antriebsmotors des Fahrzeugs, insbesondere in einem Gehäuse eines Elektromotors eines Elektrofahrrads, oder in einem Gehäuse des Steuergerätes angeordnet. Die Anordnung des Schwingungssensors in einem geschlossenen Gehäuse schützt den Schwingungssensor vor Verschmutzung und/oder Beschädigungen. Außerdem weist die Anordnung des Schwingungssensors in einem geschlossenen Gehäuse den Vorteil auf, dass Manipulationen der Geschwindigkeitsermittlung durch den Fahrzeugnutzer vermieden werden.

In einer Weiterführung der Erfindung umfasst das System den erfindungsgemäßen Schwingungserzeuger als Vorrichtung, welcher beispielsweise mittels eines Aktors das Schwingungssignal aktiv erzeugt. Dadurch wird das System sehr genau und zuverlässig.

Die Erfindung betrifft auch das Fahrzeug mit dem erfindungsgemäßen System.

Die vorliegende Erfindung wird nachfolgend anhand bevorzugter Ausführungsformen und beigefügter Zeichnungen erläutert.
- Figur 1:: Elektrofahrrad als Fahrzeug
- Figur 2:: Rollstuhl als Fahrzeug
- Figur 3:: Ablaufdiagramm des Verfahrens

### Ausführungsbeispiele

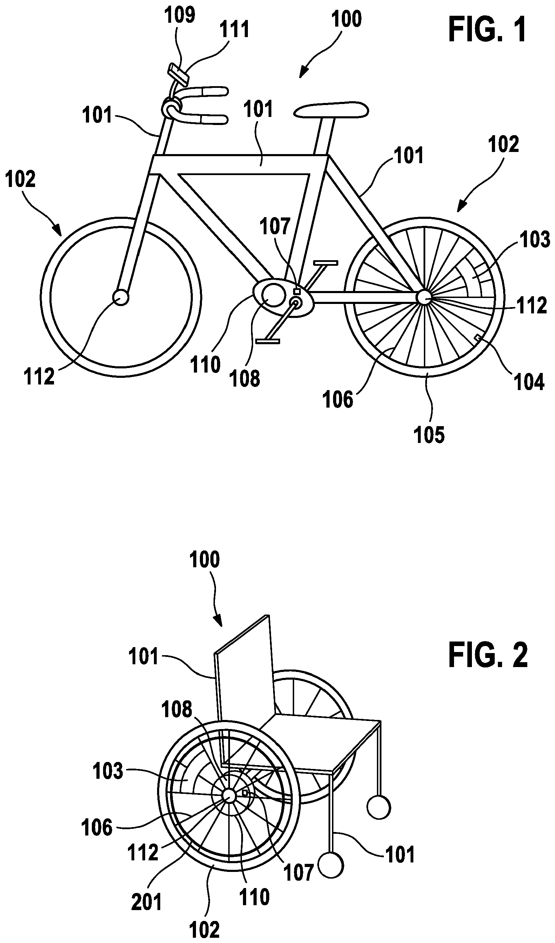

In Figur 1 ist ein Elektrofahrrad als Fahrzeug 100 dargestellt. Das Elektrofahrrad 100 umfasst einen Rahmen 101, zwei Räder 102, einen Antriebsmotor 108 mit einem Gehäuse 110, einen Schwingungssensor 107 sowie ein Steuergerät 109 mit einem Gehäuse 111. Das Elektrofahrrad 100 ist dazu eingerichtet, einen Radfahrer beim Treten durch ein Motordrehmoment des Antriebsmotors 108 zu unterstützen. An dem Vorderrad 102 und/oder, wie in Figur 1 dargestellt, an dem Hinterrad 102 des Elektrofahrrads 100 ist erfindungsgemäß ein Schwingungserzeuger 103, 104, 105, 106 und/oder 112 angeordnet. Es können mehrere Schwingungserzeuger 103, 104, 105 ,106 und/oder 112 angeordnet sein. Der Schwingungserzeuger kann ein Reifenventil 104, ein Reifenprofil 105, ein Lager 112 eines Rades 102 und/oder mindestens eine Speiche 106 des Rades 102 sein. Der Schwingungserzeuger 103 ist dazu eingerichtet, eine mechanische Schwingung des Rads bzw. ein Schwingungssignal in Abhängigkeit einer Geschwindigkeit des Fahrzeugs 100 oder einer Raddrehzahl des Rads 102 zu erzeugen. Das Schwingungssignal wird mittels des Radlagers 112 auf den Rahmen 101 des Elektrofahrrads 100 übertragen.

Alternativ kann der Schwingungserzeuger als eine aktive Vorrichtung 103 ausgestaltet sein, welcher mittels eines mechanischen Getriebes und/oder eines Aktors das Schwingungssignal aktiv erzeugt und beispielsweise an den Speichen 106 des Hinterrades 102 angeordnet bzw. fixiert ist. Beispielsweise erfasst der Schwingungserzeuger 103 mittels eines Sensors eine geschwindigkeitsabhängige Größe, beispielsweise eine Zentrifugalkraft des Rads 102 oder die den Schwingungserzeuger 103 umströmende Luft. Die umströmende Luft verursacht einen Druckwiderstand bzw. einen Druckunterschied, welcher mittels eines Sensors erfasst werden kann. Das Schwingungssignal erzeugt der aktive Schwingungserzeuger in Abhängigkeit der erfassten geschwindigkeitsabhängigen Größe mittels eines mechanischen Getriebes oder eines Aktors. Der Aktor am Schwindungserzeuger 103 ist beispielsweise ein ansteuerbarer Elektromotor oder ein MEMS-Bauteil, welches Vibrationen erzeugen kann. Der erfindungsgemäße aktive Schwingungssensor weist den Vorteil auf, dass er die Geschwindigkeit schneller und genauer erfassen kann als beispielsweise ein Reed-Sensor.

In Figur 2 ist ein Rollstuhl als Fahrzeug 100 mit mindestens einem Antriebsmotor 108 dargestellt, bevorzugt umfasst der Rollstuhl 100 an jedem Rad 102 jeweils einen Antriebsmotor 108. Die Räder 102 weisen außerdem jeweils einen Greifring 201 zur Übertragung einer manuellen Kraft eines Rollstuhlfahrers auf das Rad 102 zum Antrieb des Rollstuhls 100 auf. Der Rollstuhl 100 ist dazu eingerichtet, einen Rollstuhlfahrer beim manuellen Antrieb durch ein Motordrehmoment des Antriebsmotors 108 zu unterstützen. An wenigstens einem Rad 102 des Rollstuhls 100 ist erfindungsgemäß ein Schwingungserzeuger 103, 104, 105, 106 und/oder 112 angeordnet. In dem Gehäuse 110 des Antriebsmotors 108, welches mit dem Gestell bzw. dem Rahmen 101 des Rollstuhls 100 verbunden ist, ist ein Schwingungssensor 107 angeordnet.

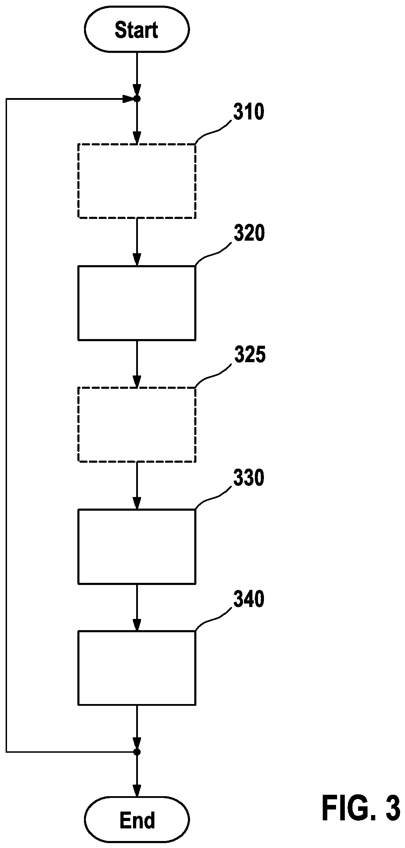

In Figur 3 ist das erfindungsgemäße Verfahren zur Regelung des Antriebsmotors 108 eines Fahrzeugs 100 in einem Ausführungsbeispiel als Ablaufdiagramm dargestellt. Die Erzeugung des Schwingungssignals des Rades 102 bzw. des Rahmens 101 kann bevorzugt passiv erfolgen, d.h. beispielsweise durch ein Reifenprofil 105, ein Reifenventil 104 und/oder eine Radspeiche 106 als Schwingungserzeuger. In einem optionalen Schritt 310 kann das Schwingungssignal durch den Schwingungserzeuger 103 mittels eines Aktors erzeugt werden. Das Verfahren weist eine Erfassung 320 des mechanischen Schwingungsfrequenzspektrums des Rahmens 101 mittels des Schwingungssensors 107 auf. Das Schwingungsfrequenzspektrum umfasst das Schwingungssignal des Schwingungserzeugers am Rad, da dieses auf den Rahmen 101 mittels des Radlagers 112 übertragen wird. Anschließend wird in dem Schritt 330 die Geschwindigkeit des Fahrzeugs 100 bzw. des Elektrofahrrads 100 in Abhängigkeit des erfassten Schwingungsfrequenzspektrums ermittelt.

Die Ermittlung 330 der Geschwindigkeit kann durch einen Vergleich des erfassten Schwingungsfrequenzspektrums mit wenigstens einem Referenzspektrum erfolgen. Beispielsweise sind in einer Tabelle für eine Vielzahl an Geschwindigkeiten jeweils Referenzfrequenzen mit Referenzamplituden hinterlegt. An den Referenzfrequenzen kann das erfasste Schwingungsfrequenzspektrums mit den Referenzamplituden beispielsweise durch Differenzbildung verglichen werden. Der Vergleich des erfassten Schwingungsfrequenzspektrums mit wenigstens einem Referenzspektrum kann alternativ auch grafisch erfolgen, beispielsweise durch eine Bildanalyse bzw. einen grafischen Vergleich eines Diagramms des erfassten Schwingungsfrequenzspektrums mit wenigstens einem Diagramm eines Referenzspektrums, welches einer Geschwindigkeit zugeordnet werden kann.

Das Verfahren kann optional einen Vergleich 325 einer Amplitude an mindestens einer Frequenz des Schwingungsfrequenzspektrums mit einem Amplitudenschwellenwert umfassen. In dieser Ausgestaltung wird die Geschwindigkeit des Fahrzeugs 100 im Schritt 330 in Abhängigkeit der Zeitdauer zwischen Überschreitungen des Amplitudenschwellenwerts ermittelt.

In einem nachfolgenden Schritt 340 wird der Antriebsmotor 108 in Abhängigkeit der ermittelten Geschwindigkeit des Fahrzeugs 100 geregelt. Bevorzugt erfolgt die Regelung 340 des Antriebsmotors beim Elektrofahrrad 100 zusätzlich in Abhängigkeit eines erfassten manuellen Drehmoments der Tretachse, welches durch den Radfahrer erzeugt wird, oder bei einem kraftunterstützten Rollstuhl zusätzlich in Abhängigkeit einer erfassten Kraft auf einen Greifring oder in Abhängigkeit einer Beschleunigung des Rollstuhls.

## Patentansprüche

1. Verfahren zur Regelung eines Antriebsmotors (108) eines Fahrzeugs (100), welches mindestens einen Schwingungssensor (107) und ein vom Schwingungssensor (107) beabstandetes Rad (102) umfasst, wobei ein Schwingungserzeuger (103, 104, 105, 106, 112) am Rad (102) angeordnet ist, welcher ein mechanisches Schwingungssignal in Abhängigkeit der Geschwindigkeit des Fahrzeugs (100) erzeugt, wobei das Schwingungssignal vom Rad (102) auf den Rahmen (101) des Fahrzeugs (100), insbesondere mittels eines Lagers (112) des Rades (102), übertragen wird, wobei das Verfahren die folgenden Schritte aufweist
• Erfassung (320) eines Schwingungsfrequenzspektrums des Rahmens (101) mittels des Schwingungssensors (107),
• Ermittlung (330) der Geschwindigkeit des Fahrzeugs (100) in Abhängigkeit des erfassten Schwingungsfrequenzspektrums, und
• Regelung (340) des Antriebsmotors (108) in Abhängigkeit der ermittelten Geschwindigkeit des Fahrzeugs (100),
**dadurch gekennzeichnet, dass** das Verfahren folgenden Schritt umfasst
• Erzeugung (310) eines Schwingungssignals mittels des Schwingungserzeugers (103), wobei der Schwingungserzeuger(103) das Schwingungssignal aktiv durch einen Aktor erzeugt.

2. Verfahren nach Anspruch 1, **dadurch gekennzeichnet, dass** die Ermittlung (330) der Geschwindigkeit in Abhängigkeit eines Vergleichs des erfassten Schwingungsfrequenzspektrums mit wenigstens einem Referenzspektrum erfolgt.

3. Verfahren nach einem der Ansprüche 1 oder 2, **dadurch gekennzeichnet, dass** das Verfahren einen Vergleich (325) einer Amplitude an mindestens einer Frequenz des Schwingungsfrequenzspektrums mit einem Amplitudenschwellenwert umfasst, wobei die Ermittlung (330) der Geschwindigkeit in Abhängigkeit einer Zeitdauer zwischen Überschreitungen des Amplitudenschwellenwerts erfolgt.

4. Schwingungserzeuger (103), wobei der Schwingungserzeuger (103) dazu eingerichtet ist,
• an einem Rad (102) eines Fahrzeugs fixiert zu werden und mit diesem mitzudrehen, und
• ein Schwingungssignal in Abhängigkeit einer Geschwindigkeit des Fahrzeugs (100) oder einer Raddrehzahl des Rads (102) zu erzeugen, wobei der Schwingungserzeuger (103) das Schwingungssignal aktiv durch einen Aktor erzeugt.

5. Schwingungserzeuger (103) nach Anspruch 4, **dadurch gekennzeichnet, dass** das erzeugte Schwingungssignal eine Frequenz kleiner als 16 Hz oder größer als 20 kHz aufweist.

6. System (400) zur Regelung eines Antriebsmotors (108) eines Fahrzeugs (100), welches einen Schwingungserzeuger (103, 104, 105, 106, 112) an einem Rad (101) aufweist, wobei das System (400) folgende Komponenten umfasst
• mindestens einen Schwingungssensor (107), welcher dazu eingerichtet ist,
i. an einem Rahmen (101) des Fahrzeugs (100) beabstandet von einem Rad (102) angeordnet zu werden, und
ii. ein Schwingungsfrequenzspektrum des Rahmens (101) zu erfassen, wobei das Schwingungsfrequenzspektrum ein vom Schwingungserzeuger (103, 104, 105, 106, 112) am Rad (101) erzeugtes Schwingungssignal umfasst,
• ein Steuergerät (109), wobei das Steuergerät (109),
i. ein Sensorsignal des Schwingungssensors (107) erfasst, und
ii. ein Steuersignal für den Antriebsmotor (108) in Abhängigkeit des erfassten Sensorsignals erzeugt, und
• einen Schwingungserzeuger (103) nach einem der Ansprüche 4 oder 5.

7. System (400) nach Anspruch 6, **dadurch gekennzeichnet, dass** der Schwingungssensor (107) in einem Gehäuse (110, 111) des Antriebsmotors (108) oder des Steuergeräts (109) angeordnet ist.

8. System (400) nach einem der Ansprüche 6 oder 7, **dadurch gekennzeichnet, dass** der Schwingungssensor (107) ein Beschleunigungssensor, ein Drucksensor oder ein Mikrofon ist.

9. Fahrzeug (100) mit einem System (400) nach einem der Ansprüche 6 bis 8.

## Claims

1. Method for regulating a drive engine (108) of a vehicle (100) which comprises at least one vibration sensor (107) and one wheel (102) which is spaced apart from the vibration sensor (107), wherein a vibration generator (103, 104, 105, 106, 112) is arranged on the wheel (102), which vibration generator (103, 104, 105, 106, 112) generates a mechanical vibration signal as a function of the speed of the vehicle (100), wherein the vibration signal is transmitted from the wheel (102) to the frame (101) of the vehicle (100), in particular by means of a bearing (112) of the wheel (102), wherein the method has the following steps:
• acquiring (320) a vibration frequency spectrum of the frame (101) by means of the vibration sensor (107),
• determining (330) the speed of the vehicle (100) as a function of the acquired vibration frequency spectrum, and
• regulating (340) the drive engine (108) as a function of the determined speed of the vehicle (100),
**characterized in that** the method comprises the following step:
• generating (310) a vibration signal by means of the vibration generator (103), wherein the vibration generator (103) actively generates the vibration signal by means of an actuator.

2. Method according to Claim 1, **characterized in that** the determination (330) of the speed takes place as a function of a comparison of the acquired vibration frequency spectrum with at least one reference spectrum.

3. Method according to either of Claims 1 and 2, **characterized in that** the method comprises a comparison (325) of an amplitude as at least one frequency of the vibration frequency spectrum with an amplitude threshold value, wherein the determination (330) of the speed is carried out as a function of a duration between times when the amplitude threshold value is exceeded.

4. Vibration generator (103), wherein the vibration generator (103) is configured
• to be secured to a wheel (102) of a vehicle and to rotate with it, and
• to generate a vibration signal as a function of the speed of the vehicle (100) or a wheel speed of the wheel (102), wherein the vibration generator (103) actively generates the vibration signal by means of an actuator.

5. Vibration generator (103) according to Claim 4, **characterized in that** the generated vibration signal has a frequency less than 16 Hz or greater than 20 kHz.

6. System (400) for regulating a drive engine (108) of a vehicle (100) which has a vibration generator (103, 104, 105, 106, 112) on a wheel (101), wherein the system (400) comprises the following components:
• at least one vibration sensor (107) which is configured
i. to be arranged on a frame (101) of the vehicle (100) at a distance from a wheel (102), and
ii. to acquire a vibration frequency spectrum of the frame (101), wherein the vibration frequency spectrum comprises a vibration signal which is generated by the vibration generator (103, 104, 105, 106, 112) on the wheel (101),
• a control unit (109) which is configured to carry out a method according to one of Claims 1 to 3, wherein the control unit (109)
i. acquires a sensor signal of the vibration sensor (107), and
ii. generates a control signal for the drive engine (108) as a function of the acquired sensor signal, and
• a vibration generator (103) according to either of Claims 5 and 6.

7. System (400) according to Claim 6, **characterized in that** the vibration sensor (107) is arranged in a housing (110, 111) of the drive engine (108) or of the control unit (109).

8. System (400) according to one of Claims 6 and 7, **characterized in that** the vibration sensor (107) is an acceleration sensor, a pressure sensor or a microphone.

9. Vehicle (100) having a system (400) according to one of Claims 6 to 8.

## Revendications

1. Procédé de réglage d'un moteur d'entraînement (108) d'un véhicule (100), qui comprend au moins un détecteur de vibrations (107) et une roue (102) distante du détecteur de vibrations (107), dans lequel un générateur de vibrations (103, 104, 105, 106, 112) est disposé sur la roue (102), et produit un signal de vibration mécanique en fonction de la vitesse du véhicule (100), dans lequel le signal de vibration est transmis de la roue (102) au cadre (101) du véhicule (100), en particulier au moyen d'un palier (112) de la roue (102), dans lequel le procédé présente les étapes suivantes:
• détection (320) d'un spectre de fréquences de vibration du cadre (101) au moyen d'un détecteur de vibrations (107),
• détermination (330) de la vitesse du véhicule (100) en fonction du spectre de fréquences de vibration détecté, et
• réglage (340) du moteur d'entraînement (108) en fonction de la vitesse déterminée du véhicule (100),
**caractérisé en ce que** le procédé comprend l'étape suivante:
• production (310) d'un signal de vibration au moyen du générateur de vibrations (103), dans lequel le générateur de vibrations (103) produit le signal de vibration de façon active au moyen d'un actionneur.

2. Procédé selon la revendication 1, **caractérisé en ce que** l'on effectue la détermination (330) de la vitesse en fonction d'une comparaison du spectre de fréquences de vibrations détecté avec au moins un spectre de référence.

3. Procédé selon une des revendications 1 ou 2, **caractérisé en ce que** le procédé comprend une comparaison (325) d'une amplitude à au moins une fréquence du spectre de fréquences de vibration avec une valeur de seuil d'amplitude, dans lequel on effectue la détermination (330) de la vitesse en fonction d'une durée entre des dépassements de la valeur de seuil d'amplitude.

4. Générateur de vibrations (103), dans lequel le générateur de vibrations (103) est configuré pour
• être fixé à une roue (102) d'un véhicule et tourner avec celle-ci, et
• produire un signal de vibration en fonction d'une vitesse du véhicule (100) ou d'un nombre de tours de roue de la roue (102), dans lequel le générateur de vibrations (103) produit le signal de vibration de façon active au moyen d'un actionneur.

5. Générateur de vibrations (103) selon la revendication 4, **caractérisé en ce que** le signal de vibration produit présente une fréquence inférieure à 16 Hz ou supérieure à 20 kHz.

6. Système (400) pour le réglage d'un moteur d'entraînement (108) d'un véhicule (100), qui présente un générateur de vibrations (103, 104, 105, 106, 112) sur une roue (101), dans lequel le système (400) comprend les composants suivants:
• au moins un détecteur de vibrations (107), qui est configuré pour
i. être disposé sur un cadre (101) du véhicule (100) à distance d'une roue (102), et
ii. détecter un spectre de fréquences de vibration du cadre (101), dans lequel le spectre de fréquences de vibration comprend un signal de vibration produit par le générateur de vibrations (103, 104, 105, 106, 112) sur la roue (101),
• un appareil de commande (109), qui est configuré pour exécuter un procédé selon l'une quelconque des revendications 1 à 3, dans lequel l'appareil de commande (109)
i. détecte un signal de détecteur du détecteur de vibrations (107), et
ii. produit un signal de commande pour le moteur d'entraînement (108) en fonction du signal de détecteur détecté, et
• un générateur de vibrations (103) selon une des revendications 5 ou 6.

7. Système (400) selon la revendication 6, **caractérisé en ce que** le détecteur de vibrations (107) est disposé dans un boîtier (110, 111) du moteur d'entraînement (108) ou de l'appareil de commande (109).

8. Système (400) selon une des revendications 6 ou 7, **caractérisé en ce que** le détecteur de vibrations (107) est un détecteur d'accélération, un capteur de pression ou un microphone.

9. Véhicule (100) doté d'un système (400) selon l'une quelconque des revendications 6 à 8.
